Europäisches Patentamt

European Patent Office

Office européen des brevets

(19)

(11) Veröffentlichungsnummer : **0 131 243**
**B1**

(12) **EUROPÄISCHE PATENTSCHRIFT**

(45) Veröffentlichungstag der Patentschrift :
04.03.87

(51) Int. Cl.⁴ : **C 08 G 65/46**

(21) Anmeldenummer : 84107709.2

(22) Anmeldetag : 03.07.84

(54) Kontinuierliches Verfahren zur Entfernung des Katalysators aus Polyphenylenethern.

(30) Priorität : 06.07.83 DE 3324338

(43) Veröffentlichungstag der Anmeldung :
16.01.85 Patentblatt 85/03

(45) Bekanntmachung des Hinweises auf die Patenterteilung : 04.03.87 Patentblatt 87/10

(84) Benannte Vertragsstaaten :
BE DE FR GB NL

(56) Entgegenhaltungen :
EP-A- 0 100 048
EP-A- 0 103 275
EP-A- 0 103 276
DE-A- 2 640 147
PATENTDS ABSTRACTS OF JAPAN, Band 4, Nr. 173
(C-32)(655), 29. November 1980;
CHEMICAL ABSTRACTS, Band 83, 1975, Seite 31, Nr.
132345q, Columbus, Ohio, US;

(73) Patentinhaber : BASF Aktiengesellschaft
Carl-Bosch-Strasse 38
D-6700 Ludwigshafen (DE)

(72) Erfinder : Berger, Rosemarie
Trifeisring 55
D-6703 Limburgerhof (DE)
Erfinder : Dreher, Hermann, Dr.
Floriansring 16
D-6104 Seeheim-Jugendheim 1 (DE)
Erfinder : Hambrecht, Juergen, Dr.
Werderstrasse 30
D-6900 Heidelberg (DE)
Erfinder : Heil, Eduard
Hardenburgstrasse 4
D-6703 Limburgerhof (DE)
Erfinder : Reffert, Rudi Wilhelm
Berliner Strasse 18
D-6711 Beindersheim (DE)
Erfinder : Swoboda, Johann, Dr.
Neuwiesenstrasse 28
D-6700 Ludwigshafen (DE)
Erfinder : Echte, Adolf, Dr.
Leuschnerstrasse 42
D-6700 Ludwigshafen (DE)
Erfinder : Siebel, Peter, Dr.
Trifeisring 20
D-6703 Limburgerhof (DE)

0 131 243

## Beschreibung

Die Erfindung betrifft ein kontinuierliches Verfahren zur Entfernung des Katalysators bei der Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 15° und 50 °C in Anwesenheit eines Katalysatorkomplexes aus einem Kupfersalz und einem organischen Amin in Gegenwart eines Lösungsmittels im Bereich von 1 : 1 bis 20 : 1 Gewichtsteilen, bezogen auf das monomere Phenol, und gegebenenfalls eines Aktivators, und Abtrennung des Metallkomponente des Katalysators aus der Polyphenylenetherlösung mit komplex- oder chelatkomplexbildenden Verbindungen in wäßriger Lösung, gegebenenfalls in Anwesenheit von reduzierenden und stabilisierenden Substanzen sowie Hilfsmitteln für die Beschleunigung der phasenübergreifenden Reaktionen und für die Phasentrennung im mindestens einer Misch-Aggregat-Abscheider-Stufe.

Polyphenylenether und Verfahren zu ihrer Herstellung sind allgemein bekannt und vielfach beschrieben, beispielsweise in den US-Patentschriften 3 306 874, 3 306 875, 3 639 656, 3 642 699 und 3 661 848.

Die zur Herstellung des Polyphenylenethers am häufigsten angewandten Verfahren umfassen die Selbstkondensation einwertiger Phenole durch Einwirkung von Sauerstoff in Gegenwart von Katalysatoren.

Als Katalysatoren werden bevorzugt Metall-Amin-Komplexe, insbesondere Cu-Amin-Komplexe eingesetzt. Als Lösungsmittel werden vorzugsweise aromatische Kohlenwasserstoffe verwendet. Die Reaktion wird gewöhnlich durch Entfernen des Katalysators aus der Reaktionslösung beendet. Dies geschieht durch Gegenstromextraktionsverfahren unter Verwendung von wäßrigen Lösungen, von anorganischen oder organischen Säuren (vgl. DE-OS 2 105 372). Verwendet werden auch Polycarbonsäuren und/oder Polyamincarbonsäuren (vgl. DE-OS 2 364 319) oder andere Chelatierungsmittel wie Nitrilotriessigsäure und ihre Natriumsalze oder Ethylendiamintetraessigsäure und ihre Natriumsalze (= $Na_3$-EDTA) (vgl. DE-OS 2 532 477) letztere auch in Kombination mit quarternären Ammoniumsalzen (vgl. US-PS 4 062 970). Beschrieben ist auch die Katalysatorabtrennung mit Hilfe komplexbildender Mittel aus der Gruppe des Bisguanids (vgl. DE-OS 2 460 325). In der DE-OS 2 640 147 ist ein kontinuierliches Verfahren zur Katalysatorabtrennung beschrieben.

Neben dem Abbrechen der oxidativen Selbstkondensation hat die Zugabe des komplexbildenden Agens auch die möglichst vollständige Entfernung des Metall-Katalysators aus dem Polyphenylenether zum Ziel, da Verunreinigungen des Polymeren durch Metallreste zu einer Verschlechterung des gesamten Eigenschaftsbildes des Polymeren führen. Insbesondere die Oxidationsempfindlichkeit und die Eigenfarbe werden betroffen.

Alle bisherigen Maßnahmen zur Entfernung von Katalysatorresten haben aber den Nachteil, daß zu einer vollständigen Entfernung (Restmenge des Metallions kleiner als 10 mg/kg) mehrfache Extraktionsschritte bei z. T. komplizierten Trennverfahren angewendet werden müssen. Häufig wird dabei der Charakter des Polyphenylenethers verändert.

Es ist bekannt, daß die Katalysatorabtrennung aus Polyphenylenether mit wäßrigen Extraktionsmitteln wegen der schlechten Phasentrennung schwierig ist, und ein Teil der metallhaltigen wäßrigen Phase in der organischen Phase verbleibt. Werden die organischen Lösungen Aufarbeitungsverfahren unterworfen, so stören die Kupfer-Katalysatorrückstände im Endprodukt.

In den EPs 103 275 und 103 276 wird ein Verfahren zur Entfernung des Katalysators aus PPE-Reaktionslösungen mit wäßrigen Lösungen von komplexbildenden Substanzen vorgeschlagen, bei dem ein geringeres Phasen-Volumen-Verhältnis organische/wäßrige Phase als in der Erfindung eingehalten wird. Diese beiden Druckschriften beruhen zwar auf einem älteren Zeitrang, sind aber nachveröffentlicht.

Aus der DE-OS 2 640 147 ist es bekannt, die Polyphenylenether-Reaktionslösung mit einer wäßrigen Lösung von komplexbildenden Substanzen in einem Mischer zu vermischen, und anschließend die Phasentrennung in einem Dekantationsgefäß durch Zumischen von alkoholhaltigen Verdünnungsmitteln zu verbessern, wobei durch die Verdünnung der wäßrigen Phase ein niedrigerer, noch tragbarer Kupfergehalt in der organischen Lösung resultiert, wenn die wäßrige Lösung nicht vollständig abgeschieden wird, wobei ein Überschuß an wäßriger Phase verwendet wird.

Dieses Verfahren hat aber die Nachteile, daß die eigentliche Komplexierung und die Verdünnung zur verbesserten Abtrennung in getrennten Mischaggregaten vorgenommen werden muß. Ferner wird bei dem vorgeschlagenen Phasenvolumenverhältnis von wäßriger zur organischen Phase von 1 : 1 bis 10 : 1 zur Abtrennung eine große Menge Alkohol benötigt, der wieder zurückgewonnen werden muß. Dabei fällt auch das Kupfer in sehr verdünnter Lösung an, was bei der Rückgewinnung oder bei der Entgiftung nachteilig ist. Weiterhin werden bei diesem Verfahren Polyphenylenetherlösungen erhalten, die noch unbefriedigend hohe Kupfermengen enthalten.

Der Erfindung liegt deshalb die Aufgabe zugrunde, ein einfaches und hochwirksames kontinuierliches Verfahren zur Abtrennung der Katalysatorreste aus den bei der Selbstkondensation einwertiger Phenole entstehenden Reaktionsprodukten zu entwickeln.

Diese Aufgabe wird erfindungsgemäß dadurch gelöst, daß das Phasenvolumenverhältnis der

2

organischen zur wäßrigen Phase 1 : 0,4-0,8, vorzugsweise 1 : 0,4-0,6, beträgt.

Weitere Merkmale des erfindungsgemäßen Verfahrens sind Gegenstand der Unteransprüche.

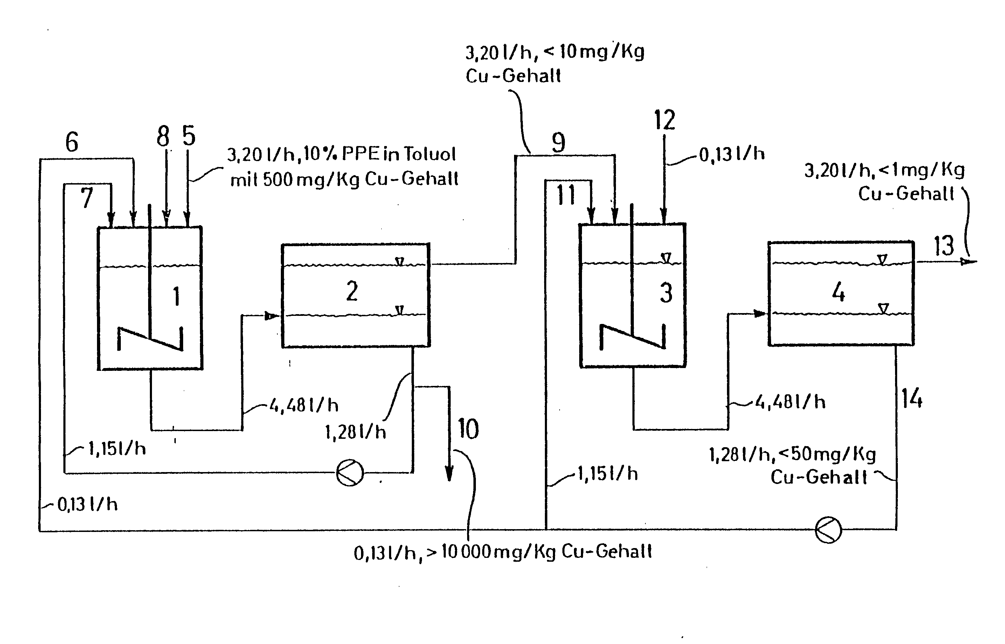

Ein Ausführungsbeispiel der Erfindung ist in der Zeichnung dargestellt und wird im folgenden näher beschrieben :

Die Zeichnung zeigt ein Verfahrensfließbild für das erfindungsgemäße kontinuierliche Verfahren zur Entfernung des Kupferkatalysators aus Polyphenylenether-Reaktionslösungen, bestehend aus zwei Mischaggregat-Abscheider-Stufen.

Die erste Mischaggregat-Abscheider-Stufe besteht aus dem Mischaggregat 1 und dem Abscheider 2, die zweite Stufe aus dem Mischaggregat 3 und dem Abscheider 4. Dem Mischaggregat 1 fließen kontinuierlich kupferhaltige Polyphenylenetherlösung 5 aus der Reaktion eine niedrig kupferhaltige, wäßrige Komplexiermittellösung 6 aus dem Abscheider 4 und eine hohe, kupferhaltige, wäßrige Phase 7 aus dem Abscheider 2 in solchen Mengenverhältnissen zu, daß sich die erfindungsgemäßen Phasenvolumenverhältnisse in stationärem Zustand einstellen. Gegebenenfalls können die oben erwähnten Reduktions- und Stabilisierungsmittel sowie Hilfsmittel 8 in das Mischaggregat 1 eingebracht werden. Der Austrag aus dem Mischaggregat 1 fließt kontinuierlich dem Abscheider 2 zu, in dem die Phasentrennung — in die hohe kupferhaltige, wäßrige Phase 7 und in die organische Phase 9 — stattfindet. Ein Teil der Phase 7, die Phase 10 — die mengenmäßig den Phasen 6 und 8 entspricht — wird kontinuierlich aus dem Kreislauf abgezogen und der Rückgewinnung oder Entgiftung zugeführt. Die organische Phase 9 aus dem Abscheider 2 und die niedrig kupferhaltige, wäßrige Komplexiermittellösung 11 aus dem Abscheider 4 sowie frische kupferfreie, wäßrige Komplexiermittellösung 12 fließen dem Mischaggregat 3 in solchen Mengenverhältnissen zu, daß sich die erfindungsgemäßen Phasenvolumenverhältnisse in stationärem Zustand einstellen. Der Austrag aus dem Mischaggregat 3 fließt kontinuierlich dem Abscheider 4 zu, in dem die Phasentrennung — in kupferarme Polyphenylenetherlösung 13 und niedrig kupferhaltige, wäßrige Komplexiermittellösung 14 — stattfindet. Die Hauptmenge 11 der Phase 14 wird im Kreislauf wieder dem Mischaggregat 3 zugeführt, während die geringe Menge 6 — wie bereits erwähnt — im Kreislauf wieder dem Mischaggregat 1 zugeführt wird. Für die Mischaggregat gelten gemäß Mengenbilanz folgende Phasenvolumenverhältnisse :

$$\frac{\text{Organische Phase}}{\text{wäßrige Phase}} = \frac{3{,}20}{0{,}13 + 1{,}15} = \frac{1}{0{,}4}.$$

In der ersten Stufe wird dabei die wäßrige Phase 10 mit einem Kupfergehalt von mindestens 1 000 mg/kg, vorzugsweise aber mit > 10 000 mg/kg, und die organische Phase mit < 10 mg/kg Kupfergehalt aus dem Abscheider 2 abgezogen. In der zweiten Stufe wird die wäßrige Komplexiermittellösung 14 mit einem Kupfergehalt von < 500 mg/kg, vorzugsweise < 50 mg/kg, aus dem Abscheider 4 abgezogen. Die organische Lösung, die der Polyphenylenetherlösung 13 entspricht, wird mit einem Kupfergehalt von < 1 mg/kg aus dem Abscheider abgezogen, und einer Aufarbeitung zugeführt.

Bei dem erfindungsgemäßen Verfahren betragen die Kontakt- bzw. die Verweilzeiten in den Mischaggregaten zwischen 2 und 40 Minuten. Messungen ergaben, daß Verweilzeiten von 10 bis 20 Minuten ausreichend sind. Die Verweilzeiten in den Abscheidern betragen wenige Minuten bis mehrere Stunden, jedoch sind bei Schwerkraftabscheidern 5 bis 60 Minuten meist ausreichend. Die Temperaturen betragen im allgemeinen 20 bis 80 °C, vorzugsweise 60 bis 75 °C, es können jedoch auch Temperaturen darüber angewendet werden, sofern oberhalb des Siededrucks des Wassers und der Lösungsmittel gearbeitet wird. Das Verfahren wird im allgemeinen drucklos oder bei geringem Überdruck durchgeführt. Die erfindungsgemäße kontinuierliche Abtrennung des Kupferkatalysators aus Polyphenylenetherlösung kann in mehreren Mischaggregat-Abscheider-Stufen erfolgen, bevorzugt wird jedoch eine Ausführungsform, bei der die gesamte Kupferkatalysatormenge in einer oder zwei Stufen entfernt wird. Die in der Zeichnung dargestellte Anordnung zur Durchführung des Verfahrens ist nur eine der im Rahmen der vorstehenden Erfindung möglichen Modelle. So können als Mischaggregate und Abscheider verschiedenartige Apparate bzw. Maschinen eingesetzt werden, so beispielsweise Rührbehälter, verschiedene Pumpentypen, Schwerkraftabscheider, Absetzbehälter, Hydrozyklone, Zentrifugen, oder Anordnung die Mischaggregate und Abscheider in einer Einheit beinhalten.

Die mit der Erfindung erzielten Vorteile bestehen insbesondere darin, daß die Kupferkatalysator-Reste in den Polyphenylenethern erheblich reduziert werden können. Die resultierenden Polyphenylenether zeichnen sich durch eine verbesserte Farb- und Oxidationsstabilität bei der Verarbeitung im Temperaturbereich über 250 °C aus. Die Abtrennung des Kupferkatalysators nach dem erfindungsgemäßen Verfahren ist einfach und erfolgt zumeist in einem Schritt. Dabei können niedrig- und relativ hochkonzentrierte Polyphenylenoxid-Reaktionslösungen bis zu ca. 25 Gew.-% ohne Probleme umgesetzt werden. Ein weiterer Vorteil besteht im schnellen Abtrennen der kupferkomplexhaltigen, wäßrigen Phase bei hohem Kupfergehalt, wodurch die Cu-Rückgewinnung oder die Entsorgung erheblich erleichtert wird.

Wie bereits erwähnt, ist ein bevorzugter Aspekt des erfindungsgemäßen Verfahrens die Herstellung von Polyphenylenetherlösungen mit niedrigem Kupfergehalt, aus denen die polymeren Stoffe nach sog. Totalisolationsverfahren, z. B. durch Sprühtrocknung, Dampfausfällung, Heißwasserzerkrümmelung und Mehrstufenentgasung gewonnen werden können. Dies erleichtert die wirtschaftliche Anwendung solcher Verfahren, die beispielsweise hinsichtlich der erforderlichen Energie und der Lösungsmittelverluste wirtschaftlicher sind als die bekannten Ausfällungsverfahren.

**Patentansprüche**

1. Kontinuierliches Verfahren zur Entfernung des Katalysators bei der Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 15° und 50 °C in Anwesenheit eines Katalysatorkomplexes aus einem Kupfersalz und einem organischen Amin in Gegenwart eines Lösungsmittels im Bereich von 1 : 1 bis 20 : 1 Gewichtsteilen, bezogen auf das monomere Phenol, und gegebenenfalls eines Aktivators, und Abtrennung der Metallkomponente des Katalysators aus der Polyphenylenetherlösung mit komplex- oder chelatkomplexbildenden Verbindungen in wäßriger Lösung, gegebenenfalls in Anwesenheit von reduzierenden und stabilisierenden Substanzen sowie Hilfsmitteln für die Beschleunigung der phasenübergreifenden Reaktionen und für die Phasentrennung in mindestens einer Mischaggregat-Abscheider-Stufe, dadurch gekennzeichnet, daß das Phasenvolumenverhältnis der organischen zur wäßrigen Phase 1 : 0,4 bis 0,8, vorzugsweise 1 : 0,4 bis 0,6 beträgt.

2. Verfahren nach Anspruch 1, dadurch gekennzeichnet, daß die kontinuierliche Abtrennung des Kupferkatalysators in vorzugsweise zwei Mischaggregat-Abscheider-Stufen vorgenommen wird.

3. Verfahren nach Ansprüchen 1 und 2, dadurch gekennzeichnet, daß in der zweiten Stufe die wäßrige Phase mit einem Kupfergehalt kleiner als 500 mg/kg, vorzugsweise kleiner als 50 mg/kg, und die organische Phase mit einem Kupfergehalt kleiner als 1 mg/kg aus dem Abscheider abgezogen wird, wobei ein Teil der wäßrigen Phase dem Mischaggregat der ersten Stufe als Komplexiermittellösung zugeführt wird, und zur Aufrechterhaltung des Phasenvolumenverhältnisses durch niedrig kupferhaltige, wäßrige Komplexiermittellösung ersetzt wird.

**Claims**

1. A continuous process for removing the catalyst in the preparation of a high molecular weight polyphenylene ether from a monohydric phenol, which is alkyl-substituted at the two ortho-positions but not at the para-position and may or may not be alkyl-substituted at the meta-position by an oxidative coupling reaktion with oxygen at from 15 to 50 °C in the presence of a catalyst complex obtained from a copper salt and an organic amine, in the presence of from 1 to 20 parts by weight of a solvent per part by weight of the monomeric phenol, and in the presence or absence of an activator, and removal of the metal component of the catalyst from the polyphenylene ether solution with a complex-forming or chelate-forming compound in aqueous solution, in the presence or absence or reducing and stabilizing substance and assistants for accelerating the interphase reactions and for phase separation in one or more mixer-settler stages, wherein the phase volume ratio of the organic phase to the aqueous phase in from 1 : 0.4 to 1 : 0.8, preferably from 1 : 0.4 to 1 : 0.6.

2. A process as claimed in claim 1, wherein the continuous removal of the copper catalyst is carried out in preferably two mixer-settler stages.

3. A process as claimed in claims 1 and 2, wherein, in the second stage, the aqueous phase removed from the settler has a copper content of less than 500, preferably less than 50 mg/kg, and the organic phase removed from the settler has a copper content of less than 1 mg/kg, and some of the aqueous phase is fed, as complexing agent solution, to the mixer of the first stage, and, in order to maintain the phase volume ratio, is replaced by aqueous complexing agent solution having a low copper content.

**Revendications**

1. Procédé continu d'élimination du catalyseur lors de la préparation d'éthers de polyphénylène de poids moléculaires élevés, à partir de phénols qui possèdent des substituants alkyle dans les deux positions ortho et éventuellement en position méta, mais pas en position para, par réaction oxydative de couplage avec de l'oxygène, à des températures comprises entre 15° et 50 °C, en présence d'un complexe catalytique obtenu à partir d'un sel de cuivre et d'une amine organique, en présence d'un solvant, dans les limites de 1/1 à 20/1 parties en poids, rapportées au phénol monomère, et éventuellement d'un activateur, et séparation des composants métalliques du catalyseur de la solution d'éther de polyphénylène avec des composés formant des complexes ou des complexes chélatés, en solution aqueuse, éventuellement en présence de substances réductrices et stabilisatrices, ainsi que des auxiliaires pour l'accélération des réactions de chevauchement de phases et pour la séparation de phases, en au moins une étape de séparation de l'agrégat mixte, caractérisé par le fait que le rapport en volumes de la phase organique à la phase aqueuse est de 1/0,4 à 0,8 de préférence 1/0,4 à 0,6.

2. Procédé selon la revendication 1, caractérisé par le fait que la séparation continue du catalyseur à base de cuivre est effectuée, de préférence, en deux étapes de séparation de l'agrégat mixte.

3. Procédé selon les revendications 1 et 2, caractérisé par le fait que, dans la seconde étape, la phase aqueuse est évacuée du séparateur avec une teneur en cuivre inférieure à 500 mg/kg, de préférence inférieure à 50 mg/kg et la phase organique avec une teneur en cuivre inférieure à 1 mg/kg, une partie de la phase aqueuse de l'agrégat mixte de la première étape étant amenée sous forme d'une solution d'agent complexant et, pour le maintien du rapport en volumes des phases, remplacée par une solution d'agent complexant aqueux, à faible teneur en cuivre.

3,20 l/h, < 10 mg/Kg
Cu-Gehalt

3,20 l/h,10% PPE in Toluol
mit 500 mg/Kg Cu-Gehalt

0,13 l/h

3,20 l/h, <1mg/Kg
Cu-Gehalt

4,48 l/h

1,28 l/h

4,48 l/h

1,15 l/h

1,28 l/h, <50 mg/Kg
Cu-Gehalt

1,15 l/h

0,13 l/h

0,13 l/h, > 10 000 mg/Kg Cu-Gehalt

0 131 243